(19) Europäisches Patentamt
European Patent Office
Office européen des brevets

(11) Veröffentlichungsnummer: **0 501 163 B1**

(12) **EUROPÄISCHE PATENTSCHRIFT**

(45) Veröffentlichungstag der Patentschrift: **27.12.95**

(21) Anmeldenummer: **92101517.8**

(22) Anmeldetag: **30.01.92**

(51) Int. Cl.[6]: **C08L 71/12**, C08L 25/00, C08L 27/12, C08K 3/38, C08K 5/49, C08K 5/5397, C08K 5/521, C08L 25/02, C08L 25/06, C08L 51/04

# (54) Rauchgasarme thermoplastische Formmassen

(30) Priorität: **26.02.91 DE 4105924**

(43) Veröffentlichungstag der Anmeldung:
**02.09.92 Patentblatt 92/36**

(45) Bekanntmachung des Hinweises auf die Patenterteilung:
**27.12.95 Patentblatt 95/52**

(84) Benannte Vertragsstaaten:
**BE CH DE ES FR GB LI NL**

(56) Entgegenhaltungen:
**EP-A- 0 085 834**
**DE-A- 3 234 033**

(73) Patentinhaber: **BASF Aktiengesellschaft**
**Carl-Bosch-Strasse 38**
**D-67063 Ludwigshafen (DE)**

(72) Erfinder: **Zeltner, Doris, Dr.**
**Viehtrifstrasse 94**
**W-6725 Römerberg (DE)**
Erfinder: **Feldmann, Heike, Dr.**
**B 4,2**
**W-6800 Mannheim 1 (DE)**
Erfinder: **Seelert, Stefan, Dr.**
**Albrecht-Dürer-Ring 23 a**
**W-6710 Frankenthal (DE)**
Erfinder: **Weiss, Robert, Dr.**
**Brüsseler-Ring 53**
**W-6700 Ludwigshafen (DE)**

EP 0 501 163 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft rauchgasarme thermoplastische Formmassen, enthaltend

A) 5 bis 94 Gew.-% eines Polyphenylenethers,

B) 5 bis 94 Gew.-% eines vinylaromatischen Polymeren,

C) 1 bis 30 Gew.-% eines Flammschutzmittels und

D) 0 bis 60 Gew.-% üblicher Zusatzstoffe in wirksamen Mengen

dadurch gekennzeichnet, daß die Komponente C) aus einer Mischung aus

C1) mindestens einem Phosphinoxid der allgemeinen Formel I

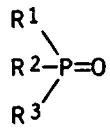

I

wobei $R^1$, $R^2$ und $R^3$ gleiche oder verschiedene Alkyl-, Aryl-, Alkylaryl- oder Cycloalkylgruppen min 8 bis 40 C-Atomen bedeuten und

C2) mindestens einem Phosphat der allgemeinen Formel II

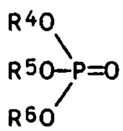

II

in der die Substituenten $R^4$, $R^5$ und $R^6$ gleiche oder verschiedene Alkyl-, Aryl-, Alkylaryl- oder Cycloalkylgruppen mit 8 bis 40 C-Atomen bedeuten,

sowie

C3) einer Borverbindung

aufgebaut ist.

Außerdem betrifft die Erfindung die Verwendung dieser Formmassen zur Herstellung von Fasern, Folien und Formkörpern sowie die aus den erfindungsgemäßen Formmassen erhältichen Formkörper.

Aus der DE-A 25 46 621 ist die Verwendung von Triarylphosphaten, wie Triphenylphosphat, zur Flammschutzausrüstung thermoplastischer Formmassen auf der Basis von Polyphenylenethern (PPE) und Styrolpolymerisaten bekannt. Der Zusatz von Phosphinoxiden ist aus der US-A 42 78 588 bekannt.

Eine Kombination beider Phosphorverbindungen ist aus der DE-A 32 34 033 bekannt. Die mechanischen Eigenschaften sind jedoch nicht zufriedenstellend. Zusätzlich verschlechtern die Phosphorverbindungen drastisch die Rauchgasdichte der Formkörper, wodurch die Anwendungsmöglichkeiten erheblich eingeschränkt werden (z.B. Anwendung in der Flugzeugindustrie).

Aus der EP-A 364 729 sind Kombinationen von Borverbindungen mit Fluorverbindungen in PPE/PS (HIPS) Formmassen bekannt, welche die Rauchgasdichte verringern. Gegebenenfalls enthaltende höhermolekulare Phosphate sind Weichmacher, wobei von der zusätzlichen Verwendung der üblichen niedermolekularen Phosphorverbindungen abgeraten wird.

Der Zusatz der Fluorverbindung beeinflußt jedoch die mechanischen Eigenschaften der Formkörper, insbesondere verschlechtert sich die multiaxiale Zähigkeit.

Aus der US-A 3 919 356 ist der Zusatz von Zinkborat in Kombination mit Antimonverbindungen bekannt. Nachteilig ist die Toxizität der Antimonverbindungen.

Weiterhin ist aus der DE-A 27 51 329 bekannt, daß Formmassen mit niedermolekularem Polyphenylenether Flammschutzmittel enthalten können.

Der vorliegenden Erfindung lag daher die Aufgabe zugrunde, thermoplastische Formmassen auf der Basis von PPE und vinylaromatischen Polymerisaten zur Verfügung zu stellen, die selbstverlöschend mit geringer Rauchgasdichte sind und gleichzeitig gute mechanische Eigenschaften, insbesondere multiaxiale Zähigkeit, sowie Fließfähigkeit aufweisen.

Demgemäß wurden die eingangs definierten rauchgasarmen thermoplastischen Formmassen gefunden.

Bevorzugte Formmassen dieser Art und ihre Verwendung sind den Unteransprüchen zu entnehmen.

Die in den erfindungsgemäßen Formmassen enthaltenen Polyphenylenether A) sind an sich bekannt. Die Polyphenylenether A) sind in den erfindungsgemäßen Formmassen in einer Menge von 5 bis 94,

bevorzugt 20 bis 79 und insbesondere 30 bis 68 Gew.-% enthalten.

Es handelt sich um Verbindungen auf Basis von substituierten, insbesondere disubstituierten Polyphenylenethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome wie Chlor oder Brom und Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Beispiele für Polyphenylenether sind Poly(2,6-dilauryl-1,4-phenylenether),Poly(2,6-diphenyl-1,4-phenylenether), Poly(2,6-dimethoxi-1,4-phenylenether), Poly(2,6-diethoxi-1,4-phenylenether), Poly(2-methoxi-6-ethoxi-1,4-phenylenether), Poly(2-ethyl-6-stearyloxi-1,4-phenylenether), Poly(2,6-dichlor-1,4-phenylenether), Poly(2-methyl-6-phenyl-1,4-phenylenether), Poly(2,6-dibenzyl-1,4-phenylenether), Poly(2-ethoxi-1,4-phenylenether), Poly(2-chlor-1,4-phenylenether), Poly(2,5-dibrom-1,4-phenylenether).Bevorzugt werden Polyphenylenether eingesetzt, bei denen die Substituenten Alkylreste mit 1 bis 4 Kohlenstoffatomen sind, wie Poly-(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether).

Unter Polyphenylenethern im Sinne der Erfindung sollen auch solche verstanden werden, die mit Monomeren wie Fumarsäure, Maleinsäure oder Maleinsäureanhydrid modifiziert sind.

Derartige Polyphenylenether sind u.a. in der WO 87/00540 beschrieben.

Hinsichtlich der physikalischen Eigenschaften der Polyphenylenether werden solche bevorzugt, die eine Grenzviskosität von 0,18 bis 0,7 dl/g, gemessen in Choroform bei 25 °C, aufweisen.

Dies entspricht einem mittleren Molekulargewicht $\overline{M}_w$ (Gewichtsmittel) von 8000 bis 60000.

Bevorzugte Polyphenylenether B) weisen ein mittleres Molekulargewicht von 40000 bis 50000 auf. Niedermolekulare Polyphenylenether B) mit einem $\overline{M}_w$ von 12000 bis 30000, insbesondere 15000 bis 25000 eignen sich gleichfalls für die erfindungsgemäßen rauchgasarmen Formmassen, insbesondere in Kombination mit Pigmenten.

Die Komponente B) ist in den erfindungsgemäßen Formmassen in Mengen von 5 bis 94, bevorzugt 20 bis 79 und insbesondere 30 bis 68 Gew.-% enthalten, bezogen auf das Gesamtgewicht der Komponenten A) bis C) sowie gegebenenfalls D).

Die Komponente B) ist ein vinylaromatisches Polymer, das vorzugsweise mit dem eingesetzten Polyphenylenether verträglich ist.

Das Molekulargewicht dieser Polymeren liegt im allgemeinen im Bereich von 1500 bis 2.000.000, vorzugsweise im Bereich von 70.000 bis 1.000.000.

Beispiele für bevorzugte, mit Polyphenylenethern verträgliche vinylaromatische Polymere sind der Monographie von O. Olabisi, Polymer-Polymer Miscibility, 1979, S. 224 bis 230 und 245 zu entnehmen.

Es kommen sowohl Homo- als auch Copolymerisate von vinylaromatischen Monomeren mit 8 bis 12 C-Atomen in Betracht.

Als monovinylaromatische Verbindungen kommen dabei insbesondere Styrol in Betracht, ferner die kern- oder seitenkettenalkylierten Styrole. Als Beispiele seien Chlorstyrol, $\alpha$-Methylstyrol, Styrol, p-Methylstyrol, Vinyltoluol und p-tert.-Butylstyrol genannt. Vorzugsweise wird jedoch Styrol allein verwendet.

Die Homopolymerisate werden im allgemeinen nach den bekannten Verfahren in Masse, Lösung oder Suspension hergestellt (vgl. Ullmanns Enzyklopädie der techn. Chemie, Band 19, Seiten 265 bis 272, Verlag Chemie, Weinheim 1980). Die Homopolymerisate können Gewichtsmittel des Molekulargewichts $M_w$ von 100 bis 300 000 aufweisen, die nach üblichen Methoden bestimmt werden können.

Als Comonomere zur Herstellung von Copolymerisaten kommen z.B. (Meth)acrylsäure, (Meth)-acrylsäurealkylester mit 1 bis 4 C-Atomen im Alkylrest, Acrylnitril und Maleinsäureanhydrid sowie Maleinsäureimide, Acrylamid und Methacrylamide sowie deren N,N oder N-alkylsubstituierten Derivate mit 1 - 10 C-Atomen im Alkylrest in Frage.

Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in der US-P 4 360 618, 4 405 753 und in der Veröffentlichung von J.R. Fried, G.A. Hanna, Polymer Eng. Scie. Band 22 (1982) Seite 705 ff beschrieben. Die Herstellung der Copolymeren erfolgt nach

bekannten Verfahren, die beispielsweise in Ullmanns Enzyklopädie der techn. Chemie, Band 19, Seite 273 ff, Verlag Chemie, Weinheim (1980) beschrieben sind. Die Copolymerisate haben im allgemeinen Gewichtsmittel des Molekulargewichtes ($M_w$) von 10 000 bis 300 000, die nach üblichen Methoden bestimmt werden können.

Bei der Komponente B) handelt es sich vorzugsweise um schlagfest modifiziertes Polystyrol, dessen Kautschukgehalt im allgemeinen von 3 bis 20 Gew.-%, vorzugsweise von 4 bis 15 Gew.-% beträgt.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-Patentschrift 2 694 692 beschrieben ist, und Verfahren zur Massesuspensionspolymerisation, wie sie beispielsweise in der US-Patentschrift 2 862 906 beschrieben sind. Selbstverständlich sind auch andere Verfahren anwendbar, sofern die gewünschte Teilchengröße der Kautschukphase eingestellt wird.

Als Kautschuke werden die üblicherweise für die Schlagzähmodifizierung von Styrolpolymerisaten gebräuchlichen natürlichen oder synthetischen Kautschuke eingesetzt. Geeignete Kautschuke im Sinne der Erfindung sind neben Naturkautschuk z.B. Polybutadien, Polyisopren und Mischpolymerisate des Butadiens und/oder Isoprens mit Styrol und anderen Comonomeren, die eine Glastemperatur, bestimmt nach K.H. Illers und H. Breuer, Kolloidzeitschrift 190 (1), 16 - 34 (1963), unter -20 °C besitzen.

Es können auch Mischungen von schlagfest modifizierten und nichtschlagfest modifizierten vinylaromatischen Polymeren eingesetzt werden, wobei das Mischungsverhältnis beliebig ist.

Als Komponente C) enthalten die erfindungsgemäßen Formmassen eine Mischung aufgebaut aus

C1) mindestens einem Phosphinoxid der allgemeinen Formel I

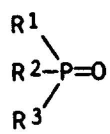

wobei $R^1$, $R^2$ und $R^3$ gleiche oder verschiedene Alkyl-, Aryl-, Alkylaryl- oder Cycloalkylgruppen mit 8 bis 40 C-Atomen bedeuten und

C2) mindestens einem Phosphat der allgemeinen Formel II

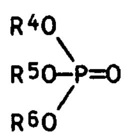

in der die Substituenten $R^4$, $R^5$ und $R^6$ gleiche oder verschiedene Alkyl-, Aryl-, Alkylaryl- oder Cycloalkylgruppen mit 8 bis 40 C-Atomen bedeuten,

sowie

C3) einer Borverbindung.

Beispiele für Phosphinoxide C1) sind Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl)-phosphinoxid, Tris-(n-octyl)-phosphinoxid, Tris-(cyanoethyl)-phosphinoxid, Benzylbis-(cyclohexyl)-phosphinoxid, Benzylbisphenylphosphinoxid, Phenylbis-(n-hexyl)-phosphinoxid. Besonders bevorzugt eingesetzt werden Triphenylphosphinoxid, Tricyclohexylphosphinoxid, Tris-(n-octyl)-phosphinoxid und Tris-(cyanoethyl)-phosphinoxid.

Als Phosphate C2) kommen vor allem alkyl- und arylsubstituierte Phosphate in Betracht. Beispiele sind Phenylbisdodecylphosphat, Phenylbisneopentylphosphat, Phenylethylhydrogenphosphat, Phenyl-bis-(3,5,5-trimethylhexylphosphat), Ethyldiphenylphosphat, Bis-(2-ethylhexyl)-p-tolyl-phosphat, Tritolylphosphat, Trixylylphosphat, Trimesitylphosphat, Bis-(2-ethylhexyl)-phenylphosphat, Tris-(nonylphenyl)-phosphat, Bis-(dodecyl)-p-(tolyl)-phosphat, Tricresylphosphat, Triphenylphosphat, Di-butylphenylphosphat, p-Tolyl-bis-(2,5,5-trimethylhexyl)-phosphat, 2-Ethylhexyldiphenylphosphat. Besonders geeignet sind Phosphorverbindungen, bei denen jedes R ein Aryl-Rest ist. Ganz besonders geeignet ist dabei Triphenylphosphat, Trixylylphosphat sowie Trimesitylphosphat. Des weiteren können auch cyclische Phosphate eingesetzt werden. Besonders geeignet ist hierbei Diphenylpentaerythritol-diphosphat.

Besonders bevorzugt sind Mischungen aus folgenden Phosphinoxid $C_1$)- und Phosphat $C_2$)-Kombinationen: Triphenylphosphinoxid-Triphenylphosphat oder Trixylylphosphat, Tricyclohexylphosphinoxid und Triphenylphosphat, Tris(cyanoethyl)phosphinoxid und Triphenylphosphat, Tris-(n-octyl)phosphinoxid und Triphenylphosphat. Es können auch Mischungen aus mehreren Phosphinoxiden und Phosphaten eingesetzt werden, wie etwa die Mischung Triphenylphosphinoxid, Triphenylphosphat, Trixylylphosphat.

Das Molekulargewicht beträgt im allgemeinen nicht mehr als 1000, bevorzugt 150 bis 800.

Unter Borverbindungen C3) sollen erfindungsgemäß sowohl anorganische als auch organische Borverbindungen verstanden werden.

Beispiele für anorganische Borverbindungen sind Borsäure, $B_2O_3$ und Salze der Borsäure, bevorzugt mit Alkali- oder Erdalkalimetallen. Besonders bevorzugt sind Borsäure, Natriumborat und Boroxid.

Organische Borverbindungen C3 sind beispielsweise Tetraphenylborate z.B. Natriumtetraphenylborat und Tribenzylborat.

Die Zusammensetzung der Komponente C) beträgt im allgemeinen (bezogen auf den Gehalt der gesamten Komponente C)

C1) 1 bis 98,9, bevorzugt 10 bis 85 und insbesondere 20 bis 70 Gew.-%

C2) 1 bis 98,9, bevorzugt 10 bis 85 und insbesondere 20 bis 70 Gew.-%

C3) 0,1 bis 70, bevorzugt 5 bis 50 und insbesondere 10 bis 30 Gew.-%.

Der Gehalt der Komponente C) in den erfindungsgemäßen Formmassen beträgt 1 bis 30, vorzugsweise 1 bis 20 und insbesondere 2 bis 15 und ganz besonders 5 bis 15 Gew.-%, bezogen auf das Gesamtgewicht der Komponenten A) bis C) und gegebenenfalls D).

Als Komponente D) können die erfindungsgemäßen thermoplastischen Formmassen auch übliche Zusatzstoffe und Verarbeitungshilfsmittel enthalten. Der Anteil dieser Zusätze beträgt im allgemeinen nicht mehr als 60, insbesondere nicht mehr als 50 und ganz besonders nicht mehr als 30 Gew.%, bezogen auf das Gesamtgewicht der Komponente A) bis D).

Als Zusatzstoffe seien Schlagzähmodifier genannt, die in Mengen bis zu 20 Gew.-%, bevorzugt bis zu 15 Gew.-% enthalten sein können und welche verschieden von Komponente B) sind.

Geeignet sind übliche Kautschuke, z.B. Acrylatkautschuk und Polymerisate konjugierter Diene, wie Polybutadienkautschuk und Polyisoprenkautschuk. Die Dienpolymerisate können, in an sich bekannter Weise, teilweise oder vollständig hydriert sein. Außerdem kommen z.B. in Betracht: Acrylnitrilbutadienkautschuk, hydrierter Styrolbutadienkautschuk, Ethylen-Propylen-Dien-Kautschuk, Polybutylen- und Polyoctenamerkautschuke, Ionomere, Blockcopolymere aus vinylaromatischen Monomeren mit Dienen wie Butadien oder Isopren (an sich bekannt aus EP-A 62 282) mit dem Aufbau $M^1M^2$-, $M^1M^2M^1M^2$- oder $M^1M^2M^1$-, wobei diese Blockpolymerisate auch statistische Segmente enthalten können, sowie Stern-Block-Copolymere. Als besonders geeignet haben sich Polymerisate konjugierter Diene wie Polybutadienkautschuk oder Polyisoprenkautschuk erwiesen. Derartige synthetische Kautschuke sind dem Fachmann geläufig und zusammenfassend in "Ullmanns Encyklopädie der Technischen Chemie", 4. Auflage, Bd. 13, Seiten 595 bis 634, Verlag Chemie GmbH, Weinheim 1977, beschrieben.

Als Zusatzstoffe seien genannt Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Glasfasern, Asbestfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide.

Auch niedermolekulare oder hochmolekulare Polymere kommen als Zusatzstoffe in Betracht, wobei Polyethylenwachs als Gleitmittel besonders bevorzugt ist.

Als Pigmente kommen z.B. in Frage $TiO_2$ und Ruße.

Bei Verwendung von $TiO_2$ liegt die mittlere Teilchengröße im Bereich von 50 - 400 nm, insbesondere 150 - 240 nm. Techn. Verwendung finden Rutile und Anatas, die gegebenenfalls mit Metalloxiden, z.B. Al-oxid, Si-Oxiden, Oxiden des Zn oder Siloxanen beschichtet sind.

Als Ruße sollen mikrokristalline, feinteilige Kohlenstoffe verstanden werden (vgl. Kunststofflexikon, 7. Auflage 1980).

Als geeignet seien die Ofenruße, Acetylenruße, Gasruße sowie die durch thermische Herstellung erhältlichen Thermalruße genannt.

Die Teilchengrößen liegen vorzugsweise im Bereich von 0,01 bis 0,1 $\mu$m und die Oberflächen im Bereich von 102 bis $10^4$ $m^2/g$ (BET/ASTM D 3037) bei DBP-Absorptionen von $10^2$ bis $10^3$ ml/100 g (ASTM d 2414).

Über Art und Menge dieser Zusatzstoffe lassen sich die gewünschten Eigenschaften der Endprodukte in weitem Maße steuern.

Die Herstellung der erfindungsgemäßen thermoplastischen Formmassen erfolgt zweckmäßigerweise durch Mischen der Komponenten bei Temperaturen im Bereich von 250 bis 320 °C in üblichen Mischvorrichtungen, wie z.B. Knetern, Banburymischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei

oder gegebenenfalls drei Komponenten vorgemischt sein oder es können auch alle Komponenten gemeinsam gemischt werden.

Aus den erfindungsgemäßen thermoplastischen Formmassen lassen sich z.B. durch Spritzguß oder Extrusion Formkörper mit guten mechanischen Eigenschaften herstellen, die insbesondere eine verbesserte Fließfähigkeit und multiaxiale Zähigkeit sowie eine sehr geringe Rauchgasdichte aufweisen. Pigmentierte Formmassen mit niedermolekularen Polyphenylenethern weisen darüberhinaus eine helle Eigenfarbe auf.

Infolge dieses Eigenschaftsspektrums eignen sich die aus den erfindungsgemäßen Formmassen herstellbaren Formkörper besonders für Anwendungen im Flugzeugbau.

Beispiele und Vergleichsbeispiele 1 bis 12

Es wurden folgende Komponenten eingesetzt:

Komponente A/1

Poly-2,6-dimethyl-1,4-phenylenether mit einer Grenzviskosität von 0,50 dl/g, gemessen in $CHCl_3$ bei 25 ° C, entsprechend einem $\overline{M}_w$ von 43000.

Komponente B/1

Schlagfestes Polystyrol mit 13 Gew.-% Polybutadien, mittlere Teilchengröße 2 bis 3 µm.

Komponente B/2

Schlagfestes Polystyrol mit 8 Gew.-% Polybutadien, mittlere Teilchengröße 5,5 µm.

Komponente C(1)

C1(1): Triphenylphosphinoxid
C1(2): Tricyclohexylphosphinoxid

Komponente C(2)

C2(1): Triphenylphosphat
C2(2): Trixylylphosphat

Komponente C(3)

C3(1): Borsäure
C3(2): Boroxid
C3(3): Natriumborat

Komponente D/1

Polytetrafluorethylen

Komponente D/2

Polyvinylidenfluorid

Komponente D/3

Styrol-hydriertes Polybutadien-Styrol-Dreiblockcopolymer mit einer Brookfield Viskosität von 1500 (Krato® G 1650, Firma Shell AG).

Herstellung der Formmassen

Die Komponenten A bis C) sowie gegebenenfalls D) wurden auf einem Zweiwellenextruder bei 290 °C gemischt und aufgeschmolzen. Der Schmelzestrang wurde durch ein Wasserbad geführt und granuliert. Das getrocknete Granulat wurde bei 280 °C zu Normkleinstäben gespritzt.

Die Flammschutzprüfung erfolgte im vertikalen Brandschutztest an 1,6 mm Feststäben nach den Vorschriften der Underwriter Laboratories UL 94 zur Einordnung in eine der Brandklassen VE-0, VE-1 oder VE-2.

Die Rauchgasdichte wurde nach ASTM E 662-79 ermittelt.

Die Messung der multiaxialen Zähigkeiten erfolgte anhand des Durchstoßtests und der daraus ermittelten Durchstoßarbeit Wges nach DIN 53 443.

Die Zusammensetzung der Formmassen und die Ergebnisse der Messungen sind den Tabellen 1 und 2 zu entnehmen.

Tabelle 1: Zusammensetzung der Formmassen

| Beispiele | A [Gew.-%] | B [Gew.-%] | C1 [Gew.-%] | C2 [Gew.-%] | C3 [Gew.-%] | D [Gew.-%] |
|---|---|---|---|---|---|---|
| 1 | A(1) 66 | B(1) 22 | C1(1) 4,4 | C2(1) 1,6 | C3(1) 1,6 | D(3) 1,6 |
| 2 | A(1) 65,2 | B(1) 21,8 | C1(2) 2,6 | C2(1) 6,2 | C3(2) 2,6 | D(3) 1,6 |
| 3* | A(1) 66 | B(1) 22 | - | C2(1) 8,8 | C3(1) 1,6 | D(3) 1,6 |
| 4* | A(1) 67 | B(1) 22,6 | C1(1) 4,4 | C2(1) 4,4 | - | D(3) 1,6 |
| 5* | A(1) 72,5 | B(1) 24,15 | - | - | C3(1) 1,6 | D(1) 0,15, D(3) 1,6 |
| 6 | A(1) 73,4 | B(1) 18,5 | C1(1) 2,7 | C2(1) 2,7 | C3(1) 2,7 | - |
| 7 | A(1) 44 | B(2) 44 | C1(2) 3,4 | C2(2) 1,8 | C3(1) 3,4 | D(3) 3,4 |
| 8* | A(1) 43,1 | B(2) 43,1 | - | C2(2) 5,2 | C3(1) 3,4 | D(3) 3,4, D(2) 1,8 |
| 9* | A(1) 44,9 | B(2) 44,8 | C1(2) 3,4 | C2(2) 1,8 | - | D(3) 3,4, D(2) 1,8 |
| 10* | A(1) 47,25 | B(2) 47,25 | - | - | C3(1) 3,4 | D(3) 3,4, D(2) 1,8 |
| 11* | A(1) 89 | - | C1(1) 1,8 | C2(1) 1,8 | C3(3) 1,8 | D(3) 5,6 |
| 12* | A(1) 88,9 | - | C1(1) 1,8 | C2(1) 1,8 | C3(3) 1,8 | D(3) 5,6, D(1) 0,1 |

* zum Vergleich

Tabelle 2: Eigenschaften der Formmassen

| Beispiel | Wges [Nm] | Brandklasse nach UL 94 1,6 mm Brandstab | Rauchgasdichte nach ASTM E 662 in DS-Einheiten 1,5 min | 4 min | 8 min |
|---|---|---|---|---|---|
| 1 | 70 | V0 | 31 | 151 | 277 |
| 2 | 69 | V0 | 23 | 126 | 240 |
| 3* | 65 | V0 | 27 | 198 | 305 |
| 4* | 56 | V0 | 102 | 749 | 657 |
| 5* | 34 | V1 | 19 | 137 | 237 |
| 6 | 49 | V0 | 19 | 103 | 187 |
| 7 | 43 | V1 | 31 | 154 | 261 |
| 8* | 44 | V1 | 48 | 169 | 253 |
| 9* | 61 | V1 | 138 | 598 | 746 |
| 10* | 39 | V-- | 26 | 175 | 231 |
| 11* | 55 | V0 | 17 | 102 | 201 |
| 12* | 49 | V0 | 20 | 103 | 227 |

*) zum Vergleich

Beispiele und Vergleichsbeispiele 13 bis 23

Komponente A/2

Poly-2,6-dimethyl-1,4-phenylenether mit einem mittleren Molekulargewicht (Gewichtsmittelwert) $\overline{M}_w$ von 16000.

Komponente A/3

Poly-2,6-dimethyl-1,4-phenylenether mit einem $\overline{M}_w$ von 24000.

Komponente A/4

Poly-2,6-dimethyl-1,4-phenylenether mit einem $\overline{M}_w$ von 40000.

Komponente B/1 gemäß den Beispielen 1 bis 12

Die Komponenten C(1), C(2), C(3) und Komponente D(1) entsprachen den Beispielen 1 bis 12

Komponente D/4

Titandioxid (Kronos® CL220 (Rutil-Typ der Firma Bayer AG, Leverkusen)) mit einem mittleren Teilchendurchmesser von 0,28 µm.

Die Herstellung und Verarbeitung der Formmassen erfolgte gemäß den Beispielen 1 bis 12. Zusätzlich wurde die Farbqualität der Formkörper durch Remissionsmessungen an 60 mm Rundscheiben gemäß Cielab DIN 6164 geprüft.

Die Zusammensetzungen der Formmassen und die Ergebnisse der Messungen sind den Tabellen 3 und 4 zu entnehmen.

Tabelle 3

| Beispiele | A [Gew.-%] | B [Gew.-%] | C1 [Gew.-%] | C2 [Gew.-%] | C3 [Gew.-%] | D [Gew.-%] |
|---|---|---|---|---|---|---|
| 13* | A(4) 40,7 | B(1) 40,7 | C1(1) 6,0 | C2(1) 6,1 | - | D(4) 6,5 |
| 14* | A(2) 40,7 | B(1) 40,7 | C1(1) 6,0 | C2(1) 6,1 | - | D(4) 6,5 |
| 15* | A(3) 40,7 | B(1) 40,7 | C1(2) 12,1 | - | - | D(4) 6,5 |
| 16 | A(2) 40,7 | B(1) 40,7 | C1(1) 4,0 | C2(1) 4,0 | C3(1) 4,1 | D(4) 6,5 |
| 17* | A(4) 51,9 | B(1) 34,6 | - | - | C3(2) 8,7 | D(4) 4,3 + D(1) 0,5 |
| 18* | A(3) 49,8 | B(1) 33,2 | C1(1) 4,1 | - | C3(2) 8,3 | D(4) 4,1 + D(1) 0,5 |
| 19* | A(3) 49,8 | B(1) 33,2 | - | C2(2) 4,1 | C3(2) 8,3 | D(4) 4,1 + D(1) 0,5 |
| 20 | A(3) 49,8 | B(1) 33,2 | C1(2) 2,0 | C2(2) 2,1 | C3(2) 8,3 | D(4) 4,1 + D(1) 0,5 |
| 21* | A(4) 41,2 | B(1) 50,4 | - | - | C3(3) 8,2 | D(1) 0,2 |
| 22 | A(3) 41,2 | B(1) 50,4 | C1(1) 2,7 | C2(1) 2,7 | C3(3) 2,7 | D(1) 0,2 |
| 23 | A(2) 41,2 | B(1) 50,4 | C1(1) 1 | C2(2) 4,5 | C3(3) 2,7 | D(1) 0,2 |

* zum Vergleich

Tabelle 4: Eigenschaften der Formmassen

| Beispiel | Remission | Brandklasse nach UL 94 | | Rauchgasdichte nach ASTM E 662 in DS-Einheiten | | |
|---|---|---|---|---|---|---|
| | [%] | 1,6 mm | 3,2 mm | 1,5 min | 4 min | 8 min |
| 13* | 50 | V1 | V0 | 140 | 550 | 800 |
| 14* | 51 | V2 | V0 | 160 | 560 | 850 |
| 15* | 49 | V1 | V0 | 150 | 540 | 820 |
| 16 | 45 | V1 | V2 | 18 | 105 | 207 |
| 17* | 30 | V2 | V0 | 80 | 350 | 490 |
| 18* | 39 | V0 | V0 | 30 | 152 | 267 |
| 19* | 37 | V0 | V0 | 25 | 147 | 282 |
| 20 | 41 | V0 | V0 | 35 | 161 | 270 |
| 21* | 29 | V2 | V2 | 203 | 533 | 817 |
| 22 | 42 | V2 | V1 | 180 | 512 | 766 |
| 23 | 40 | V2 | V1 | 197 | 542 | 785 |

*) zum Vergleich

## Patentansprüche

**1.** Rauchgasarme thermoplastische Formmassen, enthaltend
A) 5 bis 94 Gew.-% eines Polyphenylenethers,

B) 5 bis 94 Gew.-% eines vinylaromatischen Polymeren,
C) 1 bis 30 Gew.-% eines Flammschutzmittels und
D) 0 bis 60 Gew.-% üblicher Zusatzstoffe in wirksamen Mengen

dadurch gekennzeichnet, daß die Komponente C) aus einer Mischung aus

C1) mindestens einem Phosphinoxid der allgemeinen Formel I

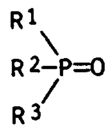

I

wobei $R^1$, $R^2$ und $R^3$ gleiche oder verschiedene Alkyl-, Aryl-, Alkylaryl- oder Cycloalkylgruppen mit 8 bis 40 C-Atomen bedeuten und

C2) mindestens einem Phosphat der allgemeinen Formel II

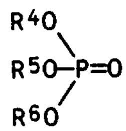

II

in der die Substituenten $R^4$, $R^5$ und $R^6$ gleiche oder verschiedene Alkyl-, Aryl-, Alkylaryl- oder Cycloalkylgruppen mit 8 bis 40 C-Atomen bedeuten,

sowie

C3) einer Borverbindung

aufgebaut ist.

2. Rauchgasarme thermoplastische Formmassen nach Anspruch 1, enthaltend
20 bis 79 Gew.-% der Komponente A)
20 bis 79 Gew.-% der Komponente B)
1 bis 20 Gew.-% der Komponente C).

3. Rauchgasarme thermoplastische Formmassen nach Anspruch 1, enthaltend
5 bis 93 Gew.-% A)
5 bis 93 Gew.-% B)
1 bis 30 Gew.-% C)
1 bis 50 Gew.-% eines faser- oder teilchenförmigen Füllstoffes oder deren Mischungen als Komponente D).

4. Rauchgasarme thermoplastische Formmassen nach den Ansprüchen 1 bis 3, in denen die Komponente C aus
1 bis 98,9 Gew.-% C1),
1 bis 98,9 Gew.-% C2) und
0,1 bis 70 Gew.-% C3)
aufgebaut ist, wobei die Gewichtsangaben sich auf den Gesamtgehalt der Komponente C) beziehen.

5. Rauchgasarme thermoplastische Formmassen nach den Ansprüchen 1 bis 4, in denen die Komponente C1) aus Triphenylphospinoxid oder Tricyclohexylphosphinoxid oder Tris-(n-octyl)phosphinoxid oder Tris-(n-butyl)phosphinoxid oder deren Mischungen aufgebaut ist.

6. Rauchgasarme thermoplastische Formmassen nach den Ansprüchen 1 bis 5, in denen die Komponente C2) aus Triphenylphosphat oder Trixylylphosphat oder Trimesitylphosphat oder Tricyclohexylphosphat oder Trihexylphosphat oder deren Mischungen aufgebaut ist.

7. Rauchgasarme thermoplastische Formmassen nach den Ansprüchen 1 bis 6, in denen die Komponente C3) aus Borsäure oder Bortrioxid oder Alkali- bzw. Erdalkaliboraten oder deren Mischungen aufgebaut

ist.

**8.** Verwendung der rauchgasarmen thermoplastischen Formmassen gemäß den Ansprüchen 1 bis 7 zur Herstellung von Formkörpern, Fasern und Folien.

**9.** Formkörper erhältlich aus den rauchgasarmen thermoplastischen Formmassen gemäß den Ansprüchen 1 bis 7.

## Claims

**1.** A low-fuming thermoplastic molding material containing
A) from 5 to 94% by weight of a polyphenylene ether,
B) from 5 to 94% by weight of a vinylaromatic polymer,
C) from 1 to 30% by weight of a flameproofing agent and
D) from 0 to 60% by weight of conventional additives in effective amounts,
wherein component C) is composed of a mixture of
C1) at least one phosphine oxide of the formula I

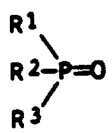

I

where $R^1$, $R^2$ and $R^3$ are identical or different alkyl, aryl, alkylaryl or cycloalkyl groups of 8 to 40 carbon atoms, and
C2) at least one phosphate of the formula II

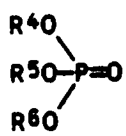

II

where $R^4$, $R^5$ and $R^6$ are identical or different alkyl, aryl, alkylaryl or cycloalkyl groups of 8 to 40 carbon atoms,
and
C3 a boron compound.

**2.** A low-fuming thermoplastic molding material as claimed in claim 1, containing
from 20 to 79% by weight of component A)
from 20 to 79% by weight of component B) and
from 1 to 20% by weight of component C).

**3.** A low-fuming thermoplastic molding material as claimed in claim 1, containing
from 5 to 93% by weight of A),
from 5 to 93% by weight of B),
from 1 to 30% by weight of C) and
from 1 to 50% by weight of a fibrous or particulate filler or of a mixture thereof as component D).

**4.** A low-fuming thermoplastic molding material as claimed in any of claims 1 to 3, in which component C is composed of
from 1 to 98.9% by weight of C1),
from 1 to 98.9% by weight of C2) and
from 0.1 to 70% by weight of C3),
the stated weights being based on the total content of component C).

5. A low-fuming thermoplastic molding material as claimed in any of claims 1 to 4, in which component C1) is composed of triphenylphosphine oxide or tricyclohexylphosphine oxide or tris-n-octylphosphine oxide or tris-n-butylphosphine oxide or a mixture thereof.

6. A low-fuming thermoplastic molding material as claimed in any of claims 1 to 5, in which component C2) is composed of triphenyl phosphate or trixylyl phosphate or trimesityl phosphate or tricyclohexyl phosphate or trihexyl phosphate or a mixture thereof.

7. A low-fuming thermoplastic molding material as claimed in any of claims 1 to 6, in which component C3) is composed of boric acid or boron trioxide or an alkali metal borate or alkaline earth metal borate or a mixture thereof.

8. Use of a low-boiling thermoplastic molding material as claimed in any of claims 1 to 7 for the production of moldings, fibers and films.

9. A molding obtainable from a low-fuming thermoplastic molding material as claimed in any of claims 1 to 7.

**Revendications**

1. Masses à mouler thermoplastiques à faible dégagement de gaz de combustion, contenant
   A) 5 à 94% en poids d'un poly(oxypbénylène),
   B) 5 à 94% en poids d'un polymère vinylaromatique,
   C) 1 à 30% en poids d'un agent retardant les flammes et
   D) 0 à 60% en poids d'additifs usuels dans des quantités efficaces,

   caractérisées en ce que le composant C) est constitué par un mélange
   C1) d'au moins un oxyde de phosphine de formule générale I

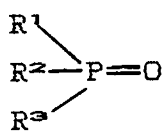

I

   $R^1$, $R^2$ et $R^3$ représentant des groupements alkyle, aryle, alkylaryle ou cycloalkyle à 8-40 atomes de carbone, identiques ou différents, et
   C2) d'au moins un phosphate de formule générale II

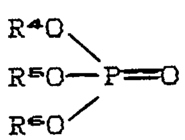

II

   dans laquelle les substituants $R^4$, $R^5$ et $R^6$ représentent des groupements alkyle, aryle, alkylaryle ou cycloalkyle à 8-40 atomes de carbone, identiques ou différents, ainsi que
   C3) d'un composé du bore.

2. Masses à mouler thermoplastiques à faible dégagement de gaz de combustion selon la revendication 1, contenant
   20 à 79% en poids du composant A),
   20 à 79% en poids du composant B),
   1 a 20% en poids du composent C).

3. Masses à mouler thermoplastiques à faible dégagement de gaz de combustion selon la revendication 1, contenant
   5 à 93% en poids de A),
   5 à 93% en poids de B),

1 à 30% en poids de C) et
1 à 50% en poids d'une charge fibreuse, d'une charge particulaire ou de mélanges de celles-ci en tant que composant D).

**4.** Masses à mouler thermoplastiques à faible dégagement de gaz de combustion selon l'une quelconque des revendications 1 à 3, dans lesquelles le composant C) est constitué par
1 à 98,9% en poids de C1),
1 à 98,9% en poids de C2 et
0,1 à 70% en poids de C3,
les pourcentages en poids se rapportant à la teneur totale en composent C).

**5.** Masses à mouler thermoplastiques à faible dégagement de gaz de combustion selon l'une quelconque des revendications 1 à 4, dans lesquelles le composent C1) est constitué par de l'oxyde de triphénylphosphine, de l'oxyde de tricyclohexylphosphine, de l'oxyde de tris(n-octyl)phosphine, de l'oxyde de tris(n-butyl)phosphine ou des mélanges de ceux-ci.

**6.** Masses à mouler thermoplastiques à faible dégagement de gaz de combustion selon l'une quelconque des revendications 1 à 5, dans lesquelles le composant C2) est constitué par du phosphate de triphényle, du phosphate de trixylyle, du phosphate de trimésityle, du phosphate de tricyclohexyle, du phosphate de trihexyle ou des mélanges de ceux-ci.

**7.** Masses à mouler thermoplastiques à faible dégagement de gaz de combustion selon l'une quelconque des revendications 1 à 6, dans lesquelles le composant C3) est constitué par de l'acide borique, du trioxyde de bore, des borates de métaux alcalins ou alcalino-terreux ou des mélanges de ceux-ci.

**8.** Utilisation des masses a mouler thermoplastiques à faible dégagement de gaz de combustion selon l'une quelconque des revendications 1 à 7 pour la fabrication de corps moulés, de fibres et de feuilles.

**9.** Corps moulés, obtenus à partir des masses à mouler thermoplastiques à faible dégagement de gaz de combustion selon l'une quelconque des revendications 1 à 7.